(19) Europäisches Patentamt / European Patent Office / Office européen des brevets

(11) **EP 4 286 438 A1**

(12) **EUROPÄISCHE PATENTANMELDUNG**

(43) Veröffentlichungstag:
**06.12.2023  Patentblatt 2023/49**

(21) Anmeldenummer: 22176274.3

(22) Anmeldetag: **31.05.2022**

(51) Internationale Patentklassifikation (IPC):
*C08G 18/22* (2006.01)        *C08G 18/36* (2006.01)
*C08G 18/48* (2006.01)        *C08G 18/66* (2006.01)
*C08G 18/76* (2006.01)        *C08J 9/36* (2006.01)

(52) Gemeinsame Patentklassifikation (CPC):
**C08G 18/4829; C08G 18/225; C08G 18/36;
C08G 18/4808; C08G 18/4812; C08G 18/4816;
C08G 18/4825; C08G 18/4833; C08G 18/4841;
C08G 18/6696; C08G 18/7664; C08G 18/7671;
C08J 9/122; C08J 9/36;** C08G 2110/0025;  (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG
51373 Leverkusen (DE)**

(72) Erfinder:
• **Goldbach, Verena
50825 Köln (DE)**
• **Reithmeier, Marina
51069 Köln (DE)**

• **Reithmeier, Richard
51069 Köln (DE)**
• **Goecdue, Hueseyin
51061 Köln (DE)**
• **Wollersheim, Tobias
51375 Leverkusen (DE)**
• **Gaca, Josip
51377 Leverkusen (DE)**
• **Koektas, Yusuf
51143 Köln (DE)**

(74) Vertreter: **Levpat
c/o Covestro AG
Gebäude K12
51365 Leverkusen (DE)**

(54) **KOMPRIMIERTER, OFFENZELLIGER, FEINZELLIGER PUR/PIR-HARTSCHAUMSTOFF**

(57)    Die vorliegende Erfindung betrifft ein Verfahren zur Herstellung komprimierter, offenzelliger, feinzelliger Polyurethan-Hartschaumstoffe, die erhaltenen Polyurethan-Hartschaumstoffe und ihre Verwendung.

**(Forts. nächste Seite)**

(52) Gemeinsame Patentklassifikation (CPC): (Forts.)
C08J 2203/06; C08J 2203/08; C08J 2205/05;
C08J 2205/10; C08J 2375/04

**Beschreibung**

Die vorliegende Erfindung betrifft ein Verfahren zur Herstellung komprimierter, offenzelliger, feinzelliger Polyurethan-Hartschaumstoffe, die erhaltenen Polyurethan-Hartschaumstoffe und ihre Verwendung.

Die Polyurethan-Hartschaumstoffe können neben Urethangruppen (PUR) auch Isocyanuratgruppen (PIR) enthalten. In dieser Anmeldung sind mit der Bezeichnung Polyurethan-Hartschaumstoff bzw. PUR/PIR-Hartschaumstoff sowohl Hartschaumstoffe, welche im Wesentlichen Urethangruppen aufweisen, als auch Hartschaumstoffe enthaltend sowohl Urethan- als auch Isocyanuratgruppen gemeint, falls nicht anders angegeben.

Polyurethan-Hartschaumstoffe sind seit langem bekannt. Ein wesentliches Einsatzgebiet ist die Temperaturisolierung. Dabei gewinnt die Anwendung von Vakuumisolationspaneelen (VIP) enthaltend Polyurethan-Hartschaumstoffe zur Isolierung zunehmend an Bedeutung. Auf die Isolationseigenschaften von für die Vakuumisolation eingesetzten Schäumen hat die Schaumqualität entscheidenden Einfluss: zum einen sind eine möglichst kleine Zellgröße und möglichst homogene Zellgrößen vorteilhaft, zum anderen ist ein hoher Anteil an offenen Zellen günstig, um den Schaum gut evakuieren zu können.

Die Herstellung von offenzelligen Polyurethan-Hartschaumstoffen ist ebenfalls prinzipiell bekannt. Im Allgemeinen werden dem Reaktionsgemisch bestimmte, zellöffnende Substanzen zugegeben, um eine Öffnung der Zellen beim Schaumprozess zu bewirken.

WO 2018/162372 A1 offenbart ein Verfahren zur Herstellung eines feinzelligen, offenzelligen Polyurethan-Hartschaumstoffs. Hierbei wird ein überkritisches $CO_2$ enthaltendes Reaktionsgemisch unter Gegendruck in ein Werkzeug eingebracht und schlagartig entspannt. Durch die besondere Zusammensetzung des Reaktionsgemischs werden Schaumstoffe besonders niedriger Dichte, hoher Offenzelligkeit und niedriger Zellgröße erhalten.

Generell wird stets versucht, eine noch bessere Kombination von Eigenschaften in Polyurethan-Hartschaumstoffen zu erzielen, zum Beispiel die Wärmeleitfähigkeit eines Schaumstoffs noch weiter zu verbessern - das heißt, verringern - ohne dabei signifikante Einbußen im Hinblick auf mechanische Eigenschaften einzugehen.

Die vorliegende Erfindung hat sich die Aufgabe gestellt, die Wärmeleitfähigkeit der aus dem Stand der Technik bekannten offen- und feinzelligen Polyurethanschaumstoffe niedriger Dichte weiter zu verringern.

Zwar wurde verschiedentlich vorgeschlagen, offenzellige Polyurethan-Hartschaumstoffe zu komprimieren. So offenbart DE 102005021994 A1 ein Verfahren, bei dem ein Polyurethan-Hartschaumstoff für VIP nach der Aushärtung und vor der Evakuierung komprimiert wird. Es wird jedoch weder die chemische Zusammensetzung noch die Offenzelligkeit, die Zellgröße oder die Dichte der Polyurethan-Hartschaumstoffe offenbart. In Anbetracht der Tatsache, dass in WO 2018/162372 A1 zum ersten Mal ein Polyurethan-Hartschaumstoff offenbart worden ist, der sowohl eine geringe Dichte als auch eine geringe Zellgröße bei großem Anteil offener Zellen aufweist, kann es sich bei dem Schaumstoff der DE 102005021994 A1 nicht um einen solchen handeln.

Gelöst werden konnte die Aufgabe überraschend durch ein Verfahren zur Herstellung eines komprimierten offenzelligen PUR/PIR-Hartschaumstoffs umfassend die Schritte

    i. Herstellen eines Reaktionsgemischs R) umfassend

        - eine gegenüber Isocyanaten reaktive Zusammensetzung A) umfassend

            eine Polyolkomponente A1) mit einer Funktionalität f von > 2,5 umfassend wenigstens ein Polyetherpolyol, Polyesterpolyol, Polycarbonatpolyol, Polyether-Polycarbonatpolyol, Polyetheresterpolyol, oder Mischungen daraus,

            gegebenenfalls eine Katalysatorkomponente A2),

            gegebenenfalls eine Hilfs- und Zusatzkomponente A3);

        - eine Polyisocyanatkomponente B); und

        - eine Treibmittelkomponente C) umfassend $CO_2$ im überkritischen Zustand,

    ii. Einbringen des Reaktionsgemischs R) aus Schritt i. in eine geschlossene Form, wobei ein Gegendruck in der geschlossenen Form während des Einbringens 2,0 - 90 bar beträgt,

    iii. Aufschäumenlassen des Reaktionsgemischs R) in der geschlossenen Form in einer Schäumrichtung, um einen PUR/PIR-Hartschaumstoff aufweisend eine Dicke $D_e$ in einer Dimension, die im Wesentlichen senkrecht zur Schäumrichtung verläuft, zu erhalten,

iv. Entformen des PUR/PIR-Hartschaumstoffs,

v. Komprimieren der Dicke $D_e$ des PUR/PIR-Hartschaumstoffs auf eine Dicke $D_k$, um den komprimierten PUR/PIR-Hartschaumstoff zu erhalten, wobei $D_k$ 0,05·$D_e$ bis 0,95·$D_e$ beträgt und wobei der Schritt v. vor oder nach dem Schritt iv. durchgeführt werden kann.

In einem Schritt i. wird also ein Reaktionsgemisch hergestellt, indem als Treibmittel wenigstens $CO_2$ im überkritischen Zustand, eine gegenüber Isocyanaten reaktive Zusammensetzung A) und eine Polyisocyanatkomponente B) miteinander vermischt werden. Die gegenüber Isocyanaten reaktive Zusammensetzung A) umfasst hierbei wenigstens eine Polyolkomponente A1) mit einer Funktionalität von 2,5 umfassend wenigstens ein Polyetherpolyol, Polyesterpolyol, Polycarbonatpolyol, Polyether-Polycarbonatpolyol, Polyetheresterpolyol, oder Mischungen daraus. Weiterhin können eine Katalysatorkomponente A2), eine Hilfs- und Zusatzkomponente A3) oder sowohl eine Katalysatorkomponente A2) als auch eine Hilfs- und Zusatzkomponente A3) in der Zusammensetzung A) enthalten sein. Schließlich können auch niedermolekulare gegenüber Isocyanaten reaktive Verbindungen A4) und/oder weitere gegenüber Isocyanaten reaktive Verbindungen A5) wie Graft-Polyole, Polyamine, Polyaminoalkohole und Polythiole in der Zusammensetzung A) enthalten sein. Denkbar sind hier alle Kombinationen von A1) mit A2), A3), A4) und/oder A5), also A1) mit A2); A1) mit A3); A1) mit A4); A1) mit A5); A1) mit A2) und A3); A1) mit A2) und A4); A1) mit A2) und A5); A1) mit A3) und A4); A1) mit A3) und A5); A1) mit A4) und A5); A1) mit A2), A3) und A4); A1) mit A2), A3) und A5); A1) mit A2), A4) und A5); A1) mit A3), A4) und A5).

In einem Schritt ii. wird das in Schritt i. erhaltene Reaktionsgemisch in eine geschlossene Form eingebracht, wobei in dieser ein Gegendruck von 2,0 bis 90 bar herrscht.

In einem Schritt iii. lässt man das Reaktionsgemisch in der geschlossenen Form aufschäumen und erhält dadurch einen PUR/PIR-Hartschaumstoff. Das Aufschäumen erfolgt in einer bestimmten Richtung, der sogenannten Schäumrichtung. Befindet sich das Reaktionsgemisch beispielsweise vor dem Aufschäumen auf dem Boden eines Quaders und steigt der beim Aufschäumen entstehende Schaumstoff vertikal nach oben, handelt es sich bei der nach oben zeigenden Vertikale um die Schäumrichtung. Der entstandene Schaumstoff weist eine zur Schäumrichtung im Wesentlichen senkrechte Dicke $D_e$ auf. Bei einer zur Richtung X "im Wesentlichen senkrechten" Richtung Y handelt es sich um Sinne dieser Anmeldung um eine Richtung Y, die zur Richtung X in einem Winkel von $(90 \pm 10)°$ verläuft.

In einem Schritt iv. entformt man den PUR/PIR-Hartschaumstoff.

In einem Schritt v. wird der PUR/PIR-Hartschaumstoff komprimiert. Dieses Komprimieren kann nach dem Entformen oder vor dem Entformen in der geschlossenen Form erfolgen. Die Dicke $D_e$ wird hierbei auf eine Dicke $D_k$ komprimiert, die 0,05 $D_e$ bis 0,95·$D_e$ beträgt.

Überraschend ist die Lösung aus dem Grund, dass die zugrundeliegenden Schaumstoffe bereits sehr feinzellig sind, das heißt für Polyurethanschaumstoffe sehr geringe Zellgrößen von teilweise weniger als 100 $\mu$m aufweisen. Zum Einen ist nicht zu erwarten gewesen, dass derartig feinzellige Schaumstoffe eine erfindungsgemäße Komprimierung überhaupt ohne Zerstörung der Zellstruktur überstehen. Zum Anderen ist nicht zu erwarten gewesen, dass bei derartig feinzelligen Schaumstoffen die Komprimierung in einer Verringerung der Wärmeleitfähigkeit resultiert, da für einen gegebenen Schaumstoff die Wärmeleitfähigkeit im Allgemeinen mit zunehmender Dichte ebenfalls zunimmt. Insbesondere bei der Komprimierung feinzelliger Schaumstoffe ist zu erwarten gewesen, dass die Leitfähigkeit des Polymermaterials dominant wird und die Leitfähigkeit des Schaumstoffs zunimmt.

In einer Ausführungsform beträgt der Anteil aller in der Polyolkomponente A1) vorhandenen primären OH-Funktionen an der Gesamtzahl der endständigen OH-Funktionen in der Polyolkomponente A1) mindestens 30%.

In einer Ausführungsform stehen die Anzahl der NCO-Gruppen in der Polyisocyanatkomponente B) und die Anzahl der gegenüber Isocyanaten reaktiven Wasserstoffatome der gegenüber Isocyanaten reaktiven Zusammensetzung A) in einem Zahlenverhältnis von $\geq$ 110:100 bis $\leq$ 300:100 zueinander.

In einer weiteren Ausführungsform ist das Reaktionsgemisch R) im Wesentlichen frei von zellöffnenden Verbindungen oder keine zellöffnenden Verbindungen enthält. Der Ausdruck "im Wesentlichen frei von" bedeutet hierbei, dass das Reaktionsgemisch R) zellöffnende Verbindungen höchstens in einer Menge enthält, die einer unbeabsichtigten Verunreinigung entspricht, z.B. weniger als 0,1 Gew.-%, bezogen auf die Gesamtmenge der gegenüber Isocyanaten reaktiven Zusammensetzung A.

In einer weiteren Ausführungsform findet Schritt i) unter für das $CO_2$ überkritischen Bedingungen statt. In einer bevorzugten Ausführungsform finden sowohl Schritt i. als auch Schritt ii. unter für das $CO_2$ überkritischen Bedingungen statt.

In einer weiteren Ausführungsform wird in Schritt iii. der Gegendruck für einen Zeitraum 1 von 1 - 40 s nach Ende des Schritts ii. gehalten und anschließend der Gegendruck während eines Zeitraums 2 mit einer Druckentlastungsrate von 1 - 90 bar/s entlastet wird.

In einer weiteren Ausführungsform weist die Polyolkomponente A1) eine Hydroxylzahl von 280 - 600 mg KOH/g, gemessen nach DIN 53240-2:2007, auf.

In einer Ausführungsform besteht die gegenüber Isocyanaten reaktive Zusammensetzung A) zu mindestens 65 Gew.-% aus der Polyolkomponente A1), die eine Hydroxylzahl zwischen 280 bis 600 mg KOH/g, gemessen nach DIN 53240-2:2007, und eine Funktionalität von $\geq$ 2,8 bis $\leq$ 6,0 aufweist. In einer weiteren Ausführungsform beträgt der Anteil der in der gegenüber Isocyanaten reaktiven Zusammensetzung A) vorhandenen primären OH-Funktionen an der Gesamtzahl aller endständigen OH-Funktionen in der gegenüber Isocyanaten reaktiven Zusammensetzung A mindestens 35%. In einer bevorzugten Ausführungsform besteht die gegenüber Isocyanaten reaktive Zusammensetzung A) zu mindestens 65 Gew.-%, bezogen auf die Gesamtmenge an A) ausgenommen A2) und A3), aus der Polyolkomponente A1), die eine Hydroxylzahl zwischen 280 bis 600 mg KOH/g, gemessen nach DIN 53240-2:2007, und eine Funktionalität von $\geq$ 2,8 bis $\leq$ 6,0 aufweist und beträgt der Anteil der in der gegenüber Isocyanaten reaktiven Zusammensetzung A) vorhandenen primären OH-Funktionen an der Gesamtzahl aller endständigen OH-Funktionen in der gegenüber Isocyanaten reaktiven Zusammensetzung A mindestens 35%.

In einer weiteren Ausführungsform besteht die gegenüber Isocyanaten reaktive Zusammensetzung A) zu mindestens 60 Gew.-% aus Polyetherpolyol.

Die gegenüber Isocyanaten reaktive Zusammensetzung A) enthält mindestens eine Polyolkomponente A1) ausgewählt aus der Gruppe bestehend aus Polyetherpolyolen, Polyesterpolyolen, Polyetheresterpolyolen, Polycarbonatpolyolen und Polyether-Polycarbonatpolyolen.

Der Anteil an primären OH-Funktionen an der Gesamtzahl der endständigen OH-Funktionen in der Polyolkomponente A1) beträgt bevorzugt mindestens 30%, mehr bevorzugt mindestens 35%, insbesondere bevorzugt mindestens 38%.

Die Polyolkomponente A1) zeichnet sich weiterhin dadurch aus, dass sie eine Funktionalität f von > 2,5, bevorzugt $\geq$2,6 bis $\leq$6,5 und besonders bevorzugt $\geq$2,8 bis $\leq$6,1 aufweist. Mit gegenüber Isocyanaten reaktiven Zusammensetzungen, in denen die Polyolkomponente A1) eine Funktionalität in diesen Bereichen aufweist, wird beim Einspritzen ein optimaler Viskositätsanstieg bis zur Entspannung des Gegendrucks gefunden und lassen sich die Schäume schneller entformen.

Die Polyolkomponente A1) weist bevorzugt eine Hydroxylzahl von 280 - 600 mg KOH/g, besonders bevorzugt von 300 - 580 mg KOH/g und insbesondere bevorzugt von 350 - 540 mg KOH/g auf. Dies wirkt sich besonders günstig auf die mechanischen Eigenschaften der Schäume aus.

Im Sinne dieser Anmeldung kann es sich bei "einem Polyetherpolyol" auch um eine Mischung unterschiedlicher Polyetherpolyole handeln, analog gilt dies für die weiteren hier aufgeführten Polyole.

Bei den erfindungsgemäß verwendbaren Polyetherpolyolen handelt es sich um die dem Fachmann bekannten, in der Polyurethansynthese einsetzbaren Polyetherpolyole.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, Bisphenole, insbesondere 4,4'-Methylenbisphenol, 4,4'-(1-Methylethyliden)bisphenol, 1,4-Butandiol, 1,6-Hexandiol sowie niedermolekulare, Hydroxylgruppen aufweisende Ester derartiger Polyole mit Dicarbonsäuren sowie Oligoether derartiger Polyole.

Bevorzugt enthält die gegenüber Isocyanaten reaktive Zusammensetzung A) bezogen auf ihr Gesamtgewicht mindestens 50 Gew.-%, bevorzugt mindestens 60 Gew.-%, insbesondere bevorzugt mindestens 70 Gew.-% Polyetherpolyol. In einer bevorzugten Ausführungsform besteht die Komponente A1) zu 100 Gew.-% aus Polyetherpolyol. Diese bevorzugten Ausführungsformen zeichnen sich durch besonders gute Hydrolysestabilität aus.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit $\geq$ 4 bis $\leq$ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit $\geq$ 1 bis $\leq$ 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält.

Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mn von vorzugsweise ≥ 18 g/mol bis ≤ 400 g/mol, bevorzugt von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit > 2 zerewitinoff-aktiven Wasserstoffen, besonders mit zahlenmittleren Funktionalitäten von > 2 bis ≤ 8, insbesondere von ≥ 3 bis ≤ 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen Mn von vorzugsweise ≥ 62 g/mol bis ≤ 400 g/mol, insbesondere von ≥ 92 g/mol bis ≤ 200 g/mol.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Es können zusätzlich auch Monocarbonsäuren wie Benzoesäure und Alkancarbonsäuren mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit $CO_2$ erhältlich.

Beispiele derartiger Diole sind Ethylenglykol, 1,2- und 1,3-Propandiol, 1,3-und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-l,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Polyetherpolyole, Polyethercarbonatpolyole und Polyetheresterpolyole mit einem hohen Anteil an primären OH-Funktionen werden erhalten, wenn die zur Alkoxylierung eingesetzten Alkylenoxide einen hohen Anteil an Ethylenoxid aufweisen. Insbesondere beträgt der molare Anteil an Ethylenoxidstrukturen, bezogen auf die Gesamtheit der in den Polyolen der Komponente A1 vorhandenen Alkylenoxidstrukturen, mindestens 50 mol%. Der Einsatz von 100 mol% Ethylenoxid ist ebenfalls eine bevorzugte Ausführungsform.

Weiterhin können in der gegenüber Isocyanaten reaktiven Zusammensetzung A) niedermolekulare gegenüber Isocyanaten reaktive Verbindungen A4) enthalten sein, insbesondere können di- oder trifunktionelle Amine und Alkohole, besonders bevorzugt Diole und/oder Triole mit Molmassen Mn kleiner als 400 g/mol, vorzugsweise von 60 bis 300 g/mol, zum Einsatz kommen, z.B. Triethanolamin, Diethylenglykol, Ethylenglykol, Glycerin. Sofern zur Herstellung der Polyurethanhartschaumstoffe solche niedermolekularen gegenüber Isocyanaten reaktiven Verbindungen Anwendung finden, z.B. in der Funktion als Kettenverlängerungsmittel und/oder Vernetzungsmittel, und diese nicht auch unter die Definition der Polyolkomponente A1) fallen, kommen diese zweckmäßigerweise in einer Menge von bis zu 5 Gew.-%, bezogen auf das Gesamtgewicht der Zusammensetzung A) zum Einsatz.

Neben den oben beschriebenen Polyolen und gegenüber Isocyanaten reaktiven Verbindungen können in der Zusammensetzung A) weitere gegenüber Isocyanaten reaktive Verbindungen A5) enthalten sein, beispielsweise Graft-Polyole, Polyamine, Polyaminoalkohole und Polythiole. Selbstverständlich umfassen die beschriebenen gegenüber Isocyanaten reaktiven Komponenten auch solche Verbindungen mit gemischten Funktionalitäten.

Eine bevorzugte gegenüber Isocyanaten reaktive Zusammensetzung A) umfasst die Polyolkomponente A1), die eine Hydroxylzahl von 280 bis 600 mg KOH/g und eine Funktionalität von $\geq 2,8$ bis $\leq 6,0$ aufweist, in einer Menge von mindestens 65 Gew.-%, insbesondere mindestens 80 Gew.-% und ganz besonders bevorzugt mehr als 90 Gew.-%, bezogen auf die Gesamtmenge an A) ausgenommen die Komponenten A2) und A3), und der Anteil an primären OH-Funktionen in der Zusammensetzung A) beträgt mindestens 35% (bezogen auf alle endständigen OH-Funktionen in der Zusammensetzung A).

In der Herstellung des PUR/PIR-Hartschaums wird als Treibmittelkomponente C) überkritisches $CO_2$ verwendet. Die Treibmittelkomponente C) wird in einer solchen Menge verwendet, wie sie zur Erzielung einer dimensionsstabilen Schaummatrix und der gewünschten Rohdichte nötig ist. In der Regel sind dies 0,5 - 30 Gewichtsteile Treibmittel bezogen auf 100 Gewichtsteile der Zusammensetzung A) ausgenommen A2) und A3).

Das $CO_2$ als physikalisches Treibmittel wird im überkritischen oder nahekritischen Zustand eingesetzt. Im Rahmen der vorliegenden Erfindung liegen nahekritische Bedingungen dann vor, wenn die folgende Bedingung erfüllt ist: $(Tc - T)/T \leq 0,4$ und/oder $(pc - p)/p \leq 0,4$. Hierbei bedeuten T die im Verfahren herrschende Temperatur, Tc die kritische Temperatur des Treibmittels oder Treibmittelgemisches, p der im Verfahren herrschende Druck und pc der kritische Druck für das Treibmittel oder Treibmittelgemisch. Vorzugsweise liegen nahekritische Bedingungen vor, wenn gilt: $(Tc - T)/T \leq 0,3$ und/oder $(pc - p)/p \leq 0,3$ und besonders bevorzugt $(Tc - T)/T \leq 0,2$ und/oder $(pc - p)/p \leq 0,2$.

Besonders geeignete Bedingungen für die Durchführung des erfindungsgemäßen Verfahrens bei Verwendung von $CO_2$ sind solche Drücke und Temperaturen oberhalb des kritischen Punktes von $CO_2$, also $\geq 73,7$ bar und $\geq 30,9$ °C, bevorzugt zwischen 74 bar und 350 bar sowie zwischen 31 °C und 100 °C, besonders bevorzugt zwischen 75 bar und 200 bar sowie zwischen 32 °C und 60 °C.

Als zusätzliche Treibmittel neben überkritischem $CO_2$ können physikalische Treibmittel eingesetzt werden. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Polyisocyanatkomponente B) reagieren.

Die zusätzlichen physikalischen Treibmittel können ausgewählt sein aus der Gruppe aus Kohlenwasserstoffen (z. B. n-Pentan, iso-Pentan, cyclo-Pentan, Butan, Isobutan, Propan), Ethern (z.B. Methylal), halogenierten Ethern, perfluorierten und teilfluorierten Kohlenwasserstoffen mit 1 bis 8 Kohlenstoffatomen, z. B. Perfluorhexan, HFC 245fa (1,1,1,3,3-Pentafluorpropan), HFC 365mfc (1,1,1,3,3-Pentafluorbutan), HFC 134a oder deren Mischungen verwendet, sowie (hydro)fluorierte Olefine, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie deren Gemische untereinander.

Werden weitere Treibmittel zugesetzt, enthält die Treibmittelkomponente C) in einer Ausführungsform bevorzugt mehr als 60 Gew.-% überkritisches $CO_2$, besonders bevorzugt mehr als 75 Gew.-%.

Zusätzlich zu oder auch statt der physikalischen Treibmittel können auch chemische Treibmittel (auch "Co-Treibmittel") verwendet werden. Bei diesen handelt es sich besonders bevorzugt um Wasser und/oder Ameisensäure. Bevorzugt werden die Co-Treibmittel in einer Menge von 0 bis 6 Gew.-%, besonders bevorzugt von 0,5 bis 4 Gew.-%, bezogen auf die Gesamtmenge an Verbindungen mit gegenüber Isocyanatgruppen reaktiven Wasserstoffatomen in dem schaumbildenden Reaktionsgemisch R), eingesetzt.

Der Anteil des Treibmittels C) beträgt, jeweils bezogen auf die Gesamtmenge der Komponenten A) und C), bevorzugt ≥ 1 Gew.-% bis ≤ 30 Gew.-%, mehr bevorzugt ≥ 4 Gew.-% bis ≤ 20 Gew.-%., besonders bevorzugt ≥ 6 Gew.-% bis ≤ 16 Gew.-%; der Anteil des Treibmittels an dem Reaktionsgemisch R) beträgt 0,5 Gew.-% bis 15 Gew.-%, bevorzugt 2 Gew.-% bis 10 Gew.-%, besonders bevorzugt ≥ 3 Gew.-% bis ≤ 8 Gew.-%, jeweils bezogen auf die Gesamtmenge an R).

In einer weiteren Ausführungsform umfasst die gegenüber Isocyanaten reaktive Zusammensetzung A) eine Katalysatorkomponente A2), bevorzugt eine Katalysatorkomponente A2) in einer Menge von ≥ 0,01 bis < 2,0 Gew.-%, bezogen auf das Gesamtgewicht der gegenüber Isocyanaten reaktiven Zusammensetzung A).

Als Katalysatorkomponente A2) werden üblicherweise Verbindungen verwendet, welche die Reaktion der Hydroxylgruppen bzw. gegenüber Isocyanaten reaktiven Gruppen enthaltenden Verbindungen der Zusammensetzung A) mit den Isocyanatgruppen der Komponente B beschleunigen.

Die Katalysatorkomponente A2) kann A2a) mindestens eine katalytisch aktive Aminverbindung mit funktionellen Gruppen, welche über Zerewitinoff-aktive Wasserstoffe verfügen und daher mit Isocyanat reagieren können (sogenannte "einbaubare Katalysatoren"). Beispiele für einsetzbare einbaubare Katalysatoren sind beispielsweise Bis-dimethylaminopropylharnstoff, Bis(N,N-Dimethylaminoethoxyethyl)carbamat, Di-methylamino-propylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Di¬methyaminopropyl-N,N-dimethylpropan-1,3-diamin, Dimethyl-2-(2-amino¬ethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3aminopropyl)-bis(aminoethylether), 3-Dimethylaminoisopropyl-diisopropanolamin oder Mischungen davon.

Daneben können eine oder mehrere weitere Verbindungen A2b), insbesondere die für die PUR/PIR-Chemie bekannten katalytisch aktiven Verbindungen eingesetzt werden, neben weiteren Aminverbindungen auch Salze wie z.B. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-di-methylamino-propyl)-s-hexahydrotriazin, Tetramethyl-ammoniumhydroxid, Natriumacetat, Natriumoctoat, Kaliumacetat, Kaliumoctoat, Natriumhydroxid.

Die Katalysatorkomponente A2) wird im Allgemeinen in einer Menge von 0,001 bis 5 Gew.-%, insbesondere von 0,05 bis 2,5 Gew.-%, bezogen auf das Gewicht der Zusammensetzung A), eingesetzt. Besonders bevorzugt enthält die Katalysatorkomponente A2) sowohl einbaubare Katalysatoren A2a) als auch nicht einbaubare Katalysatoren A2b). Insbesondere ist es bevorzugt, dass einbaubare Aminverbindungen und katalytisch aktive Salze in Kombination eingesetzt werden.

Die Katalysatoren A2a) und A2b) werden bevorzugt in einem molaren Verhältnis A2a)/A2b) von 0,1 bis 16,3 eingesetzt, besonders bevorzugt von 0,3 bis 10 und ganz besonders bevorzugt von 0,8 bis 6,0. Die Katalysatorkomponente A2) enthält bevorzugt als katalytisch aktive Verbindung A2a) eine in das Polyurethan einbaubare Aminverbindung und weiterhin die katalytisch aktive Verbindung A2b), bei welcher es sich um ein nicht in das Polyurethan einbaubares, katalytisch aktives Salz handelt, und das molare Verhältnis von A2a)/A2b) beträgt 0,1 bis 16,3, besonders bevorzugt von 0,3 bis 10 und ganz besonders bevorzugt von 0,8 bis 6,0. In einer besonders bevorzugten Ausführungsform werden 3-(Dimethylamino)Propylharnstoff und Kaliumacetat in einem molaren Verhältnis A2a)/A2b) von 0,1 bis 6,0, besonders bevorzugt von 0,3 bis 10 und ganz besonders bevorzugt von 0,8 bis 6,0, eingesetzt. Die bevorzugten Katalysatorverhältnisse bzw. Katalysatoren wirken sich besonders günstig auf einen definierten Viskositätsaufbau aus.

In einer Ausführungsform weist die gegenüber Isocyanaten reaktive Zusammensetzung A) eine Hilfs- und Zusatzkomponente A3) auf, die einen Stabilisator umfasst, bevorzugt einen Stabilisator in einer Menge von ≥ 0,05 bis < 5 Gew.-%, bezogen auf das Gesamtgewicht der gegenüber Isocyanaten reaktiven Zusammensetzung A), umfasst.

In einer weiteren Ausführungsform ist das Reaktionsgemisch R) im Wesentlichen frei von zellöffnenden Verbindungen oder keine zellöffnenden Verbindungen enthält. Der Ausdruck "im Wesentlichen frei von" bedeutet hierbei, dass das Reaktionsgemisch R) zellöffnende Verbindungen höchstens in einer Menge enthält, die einer unbeabsichtigten Verunreinigung entspricht, z.B. weniger als 0,1 Gew.-%, bezogen auf die Gesamtmenge der gegenüber Isocyanaten reaktiven Zusammensetzung A.

Das Reaktionsgemisch R) kann Hilfs- und Zusatzstoffe A3) enthalten. Die Hilfs- und Zusatzstoffe können zellöffnenden Verbindungen enthalten, umfassen jedoch bevorzugt im Wesentlichen keine oder sind frei von zellöffnenden Verbindungen. Zellöffnende Verbindungen sind beispielsweise im Kunststoff-Handbuch, Band 7, Polyurethane, Carl Hanser Verlag, München / Wien, 3. Auflage, 1993, Seiten 104-127 beschrieben. Es handelt sich beispielsweise um Silikone, wie Polyether-Polydimethylsiloxan-Copolymere, oder organische Polymere, z.B. solche auf Basis Polybutadien (z.B. Ortegol 500 und 501 von Evonik Industries), Tenside, wie z.B. das Natriumsalz von ethoxyliertem und sulfatisiertem Isotridecylalcohol, welches unter dem Handelsnamen Sermul EA266 (Elementis Specialties, Niederlande) erhältlich ist, sowie Mischungen unterschiedlicher Komponenten, z.B. Mischungen aus aminstabilisierten, makromolekularen, ungesättigten Kohlenwasserstoffen und Phthalsäureestern.

Weitere Hilfs- und Zusatzstoffe A3), die in dem erfindungsgemäßen Verfahren eingesetzt werden können, sind die aus dem Stand der Technik und dem Fachmann bekannten und üblichen Hilfs- und Zusatzstoffe. Genannt seien beispielsweise oberflächenaktive Substanzen, Stabilisatoren, insbesondere Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Es werden häufig Polyether-Polydimethylsiloxan-Copolymere als Schaumstabilisatoren verwendet, vorzugsweise ein Polyethylenoxid-Polyether mit Oligodimethylsiloxan-Endgruppen, wobei die Zahl der Dimethylsiloxan-Einheiten vorzugsweise $\leq 5$ ist.

Als Stabilisatoren können auch gesättigte und ungesättigte Kohlenwasserstoffe wie Paraffine, Polybutadiene, Fettalkohole sowie Ester, z.B. Ester von Carbonsäuren, eingesetzt werden. Bevorzugt werden solche Stabilisatoren, insbesondere Schaumstabilisatoren eingesetzt, die keine zellöffnende Wirkung haben.

Die Zusammensetzung A) enthält bevorzugt insgesamt maximal 3 Gew.-% Silikone und Polybutadiene.

Weiterhin können als Stabilisatoren Tenside eingesetzt werden, beispielsweise alkoxylierte Alkanole wie Ether von linearen oder verzweigten Alkanolen mit $\geq 6$ bis $\leq 30$ Kohlenstoffatomen mit Polyalkylenglykolen mit $\geq 5$ bis $\leq 100$ Alkylenoxideinheiten, alkoxylierte Alkylphenole, alkoxylierte Fettsäuren, Carbonsäureester eines alkoxylierten Sorbitans (insbesondere Polysorbat 80), Fettsäureester, Polyalkylenamine, Alkylsulfate, Phosphatidylinositole, fluorierte Tenside, Polysiloxangruppen umfassende Tenside und/oder Bis(2-ethyl-1-hexyl)sulfosuccinat. Fluorierte Tenside können perfluoriert oder teilfluoriert sein. Beispiele hierfür sind teilfluorierte ethoxylierte Alkanole oder Carbonsäuren.

Bevorzugt enthält die Zusammensetzung A) insgesamt maximal 5 Gew.-% Tenside, insbesondere bevorzugt maximal 3 Gew.-%, mehr bevorzugt weniger als 2 Gew.-% und insbesondere bevorzugt maximal 1,6 Gew.-% an Tensiden, bezogen auf das Gesamtgewicht der Zusammensetzung A).

Das Reaktionsgemisch R) umfasst eine Polyisocyanatkomponente B), also ein Isocyanat mit einer NCO-Funktionalität von $\geq 2$. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Isocyanatkomponente B) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO - Funktionalität f > 2 aufweisen und folgende Strukturformel aufweisen: C15H10N2O2 [C8H5NO]n, wobei n = ganze Zahl > 0, bevorzugt n = 1, 2, 3 und 4, ist. Höherkernige Homologe C15H10N2O2 [C8H5NO]m, m = ganze Zahl $\geq 4$) können ebenfalls im Gemisch aus organischen Polyisocyanaten a) enthalten sein. Als Isocyanatkomponente B) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-l,8-octandiisocyanat (Nonantriisocyanat) oder Triphenylmethan-4,4',4"-triisocyanat mit eingesetzt werden.

Statt oder zusätzlich zu den oben genannten Polyisocyanaten können auch geeignete NCO-Präpolymere als organische Isocyanatkomponente B) eingesetzt werden. Die Präpolymere sind herstellbar durch Umsetzung eines oder mehrerer Polyisocyanate mit einem oder mehreren Polyolen, entsprechend den unter den Komponenten A1) und A2) beschriebenen Polyolen.

Es ist möglich, dass das Isocyanat ein Präpolymer ist, welches erhältlich ist durch Reaktion eines Isocyanats mit einer NCO-Funktionalität von $\geq 2$ und Polyolen mit einem Molekulargewicht von $\geq 62$ g/mol bis $\leq 8000$ g/mol und OH-Funktionalitäten von $\geq 1,5$ bis $\leq 6$.

Der NCO-Gehalt beträgt bevorzugt von $\geq$ 29,0 Gew.-% bis $\leq$ 32,0 Gew.%, und weist bevorzugt eine Viskosität bei 25 °C von $\geq$ 80 mPas bis $\leq$ 2000 mPas, besonders bevorzugt von $\geq$ 100 mPas bis $\leq$ 800 mPas auf (dynamische Viskosität bestimmt nach DIN 53019, bei 25°C).

Die Anzahl der NCO-Gruppen in der Polyisocyanatkomponente B) und die Anzahl der gegenüber Isocyanaten reaktiven Gruppen der Komponente A) können beispielsweise in einem Zahlenverhältnis von $\geq$ 50:100 bis $\leq$ 300:100 zueinander stehen. Zur Herstellung der Polyurethan-Hartschaumstoffe werden in der Regel die Komponenten A) und B) in solchen Mengen zur Umsetzung gebracht, dass die Isocyanat-Kennzahl der Rezeptur 80 - 150, bevorzugt 90 - 130, besonders bevorzugt 95 - 125 beträgt. In diesem Bereich werden bevorzugt Urethangruppen gebildet. In einer anderen bevorzugten Ausführungsform beträgt die Isocyanat-Kennzahl 150 - 300. In diesem Bereich weisen die Schaumstoffe einen hohen Anteil an Isocyanurat-Funktionen auf, welche z.B. eine inhärente Flammwidrigkeit der Schaumstoffe bewirken.

Wenigstens besteht das erfindungsgemäße Verfahren aus den Schritten i. bis v.

Im Schritt i. des erfindungsgemäßen Verfahrens wird das Reaktionsgemisch R) aus den Komponenten A), B) und C) hergestellt.

Hierfür kann die Zusammensetzung A) beispielsweise in einem Kessel vorgelegt werden, anschließend mit der Treibmittelkomponente C) vermischt werden und mit dem Polyisocyanat B) versetzt werden. Die Vermischung der Komponenten kann auch in einem Mischkopf erfolgen.

Die Vermischung, insbesondere mit den Komponenten C) und B), kann unter Druck erfolgen. In einer bevorzugten Ausführungsform werden die Komponenten A) und C) mit der Komponente B) in einem Hochdruck-Mischkopf vermischt.

Es handelt sich bei der Treibmittelkomponente C) um $CO_2$ im überkritischen Zustand und die Umsetzung der Komponenten findet vorzugsweise unter für $CO_2$ überkritischen Bedingungen statt. In diesem Fall sind geeignete Drücke im Mischkopf und/oder in der Austragsleitung bzw. den Austragsleitungen für die Herstellung des Polyurethanschaums beispielsweise im Bereich von $\geq$ 73,7 bar bis $\leq$ 350 bar und vorzugsweise im Bereich von $\geq$ 75 bar bis $\leq$ 200 bar. Geeignete Temperaturen sind beispielsweise $\geq$ 30,9 °C bis $\leq$ 100 °C und vorzugsweise $\geq$ 32 °C bis $\leq$ 60 °C. Bei solchen Drücken können überkritische Bedingungen für das eingesetzte Treibmittel aufrechterhalten werden.

In einer weiteren Ausführungsform beträgt die Verweilzeit der Mischung im Mischkopf unter überkritischen Bedingungen des Treibmittels > 0 Sekunden bis $\leq$ 20 Sekunden, bevorzugt von $\geq$ 0,1 Sekunden bis $\leq$ 10 Sekunden und besonders bevorzugt von $\geq$ 0,5 Sekunden bis $\leq$ 5 Sekunden. Dies führt dazu, dass die Mischung unter überkritischen Bedingungen polymerisieren kann. Die Verweilzeit kann durch das Volumen der Reaktionskammer (=Mischkammer und/oder Rohrleitungen), in der überkritische Bedingungen herrschen, geteilt durch das Volumen der Mischung, die in einer bestimmten Zeiteinheit gefördert wird, bestimmt werden.

In Schritt ii. des erfindungsgemäßen Verfahrens wird das erfindungsgemäße Reaktionsgemisch R) aus den Komponenten A), B) und C) in eine geschlossene Form eingebracht, wobei ein Gegendruck in der Form während des Einbringens 2,0 - 90 bar, bevorzugt 2,0 - 80 bar, besonders bevorzugt 5,0 - 40 bar beträgt.

Mögliche Ausführungsformen hierfür sind die folgenden: der Gegendruck wird durch Beaufschlagung der Form mit Gas (Druckluft bzw. Stickstoff) entweder direkt und/oder durch eine schwimmende Dichtung, die den druckbeaufschlagten Raum in Gas- und Reaktionsraum unterteilt, erreicht, und über ein Proportionalventil eingestellt, gehalten und letztlich entlastet.

In Schritt iii. des Verfahrens lässt man das Reaktionsgemisch aufschäumen.

Eine bevorzugte Ausführungsform des Schritts iii) die folgende: der Gegendruck in der Form wird nach Ende des Schritts ii. für einen Zeitraum 1, welcher bevorzugt 1 - 40 Sekunden, besonders bevorzugt 5 - 20 Sekunden und ganz besonders bevorzugt 8 - 17 Sekunden beträgt, konstant gehalten, wobei die Viskosität des Reaktionsgemischs zunächst ohne Aufschäumen des Reaktionsgemischs ansteigt. Es hat sich gezeigt, dass das Halten des Druckes während der bevorzugten Zeitdauer in besonders günstigen Viskositätsbereichen des Gemischs für diesen Reaktionsabschnitt resultiert. Nach Beendigung des Zeitraums 1 wird die Form entspannt. Die Entlastung des Drucks aus der Form erfolgt innerhalb eines Zeitraums 2, mit einer Druckentlastungsrate von 1-90 bar/s, bevorzugt 1 - 80 bar/s, besonders bevorzugt 2 - 70 bar/s. Die Entlastung kann insbesondere über ein Proportionalventil erfolgen. Während des Zeitraums 2 schäumt das Reaktionsgemisch auf. Eine zu schnelle Entlastung wirkt sich negativ auf die Zellstabilität, eine zu langsame Entlastung negativ auf die Aufschäumreaktion aus.

In Schritt iv. des Verfahrens wird der PUR/PIR-Hartschaumstoff entformt.

In Schritt v. des Verfahrens wird der PUR/PIR-Hartschaumstoff komprimiert. Das Komprimieren kann vor oder nach dem Schritt iv. durchgeführt werden. Hierfür wird der PUR/PIR-Hartschaumstoff in seiner Dicke reduziert.

Dies kann durch Volumenreduzierung der Reaktionsform durch beispielsweise ein Einlegen von Platten und erneutem Schließen der Form mit Hartschaumstoff erfolgen. Das Volumen der Reaktionsform kann um 5 - 95%, bevorzugt um 40 - 70% reduziert werden. Eine Reduktion von $D_e$ zu $D_k$ um 40% entspricht hierbei einer Reduktion auf (100 - 40)% = 60% von $D_e$, das heißt eine Komprimierung eines Hartschaumstoffs der Dicke $D_e$ = 100 mm um 40% entspricht einer Komprimierung zu einem komprimierten Hartschaumstoff der Dicke $D_k$ = (100 - 0,4* 100) mm = 60 mm.

Das Komprimieren in einer volumenreduzierten Form kann nach einer bestimmten Zeitdauer nach Aufschäumen des Reaktionsgemisches ausgeführt werden. Diese Zeitdauer kann 10 s - 30 min, bevorzugt 1 - 10 min betragen. Es kann also sowohl vor als auch nach der Aushärtung des Schaumstoffes komprimiert werden. Die Dauer des Komprimieren, also des Haltens der Volumenreduzierung bei geschlossener Form, beträgt 1 - 30 min, bevorzugt 2 - 15 min. Der Zeitpunkt des Komprimierens und die Dauer beeinflussen die daraus resultierende Dicke $D_k$ des komprimierten Schaumstoffes, welche 24 h nach dem Ende des Komprimierens gemessen wird.

Alternativ kann der Hartschaum in einer hydraulischen Presse nach Schritt iv. komprimiert werden.

Gegenstand der vorliegenden Erfindung ist auch ein offenzelliger PUR/PIR-Hartschaumstoff, der durch das erfindungsgemäße Verfahren erhältlich ist oder erhalten wird. Der erfindungsgemäße Schaumstoff weist gute mechanische Eigenschaften, insbesondere gute Dimensionsstabilität unter erhöhter Temperatur und bevorzugt auch gute Druckfestigkeit auf.

Bevorzugt weist dieser offenzellige PUR/PIR-Hartschaumstoff eine Rohdichte von 30 - 90 kg/m³, bevorzugt 30 - 120 kg/m³, gemäß ISO 845:2006 eine Offenzelligkeit von > 90%, bevorzugt ≥ 94%, gemäß ISO 4590:2002 und einen durchschnittlichen Zelldurchmesser (arithmetisch gemittelt) von 70 - 130 μm gemäß lichtmikroskopischer Auswertung auf. Hierbei bezieht sich der Wert des durchschnittlichen Zelldurchmessers auf den noch nicht in Schritt v. komprimierten Schaumstoff.

Aus den erfindungsgemäßen PUR/PIR-Schaumstoffen lassen sich in bevorzugter Weise geschäumte Formkörper und Verbundsysteme enthaltend diese Formkörper herstellen. Die Verbundsysteme sind oft sowohl an der Ober- als auch an der Unterseite durch Dekorschichten begrenzt. Als Dekorschichten kommen unter anderem Metalle, Kunststoffe, Holz und Papier in Frage. Als Anwendungsgebiete solcher diskontinuierlich hergestellten PUR/PIR-Verbundsysteme sind insbesondere zu nennen die technische Isolierung von Geräten wie Kühlschränken, Kühltruhen, Kühlgefrierkombinationen und Boilern, Kühlcontainern und Kühlboxen sowie von Rohren.

Der Einsatz von PUR/PIR-Schaumstoffen auf diesen Gebieten ist dem Fachmann grundsätzlich bekannt und wurde schon vielfach beschrieben. Die erfindungsgemäßen PUR/PIR-Schaumstoffe eignen sich außerordentlich gut für diese Zwecke, da sie sich durch hohe Dimensionsstabilität und vorteilhafter Weise auch durch hohe Druckfestigkeit und geringe Wärmeleitzahlen, die durch das Anlegen von Vakuum noch weiter gesteigert werden können, auszeichnen.

Weiterhin ist Gegenstand der Erfindung ein Kühlschrank, Gefrierschrank oder eine Kühl-Gefrierkombination, enthaltend einen PUR/PIR-Hartschaumstoff erhältlich gemäß dem erfindungsgemäßen Verfahren.

In dieser Anmeldung verwendete Bezeichnungen haben die folgende Bedeutung:
Unter dem Index (auch Isocyanat-Index, Isocyanat-Kennzahl, oder Kennzahl genannt) wird der Quotient aus der tatsächlich eingesetzten Stoffmenge [mol] an Isocyanat-Gruppen und der tatsächlich eingesetzten Stoffmenge [mol] an gegenüber Isocyanaten reaktiven Wasserstoffatomen, multipliziert mit 100, verstanden:

$$\text{Index} = (\text{Isocyanat-Gruppen [mol] / gegenüber Isocyanaten reaktive Wasserstoffatome [mol]}) \cdot 100$$

Mit "Funktionalität" oder "f" einer Verbindung ist im Sinne dieser Anmeldung die theoretische Funktionalität gemeint: so beträgt die Funktionalität eines ausschließlich Glycerin-gestarteten Polyols f = 3, die eines ausschließlich Ethylendiamin-gestarteten Polyols f = 4. Mit "Funktionalität" oder "f" einer Komponentenmischung ist im Sinne dieser Anmeldung jeweils die zahlengemittelte Funktionalität der Mischung gemeint, auf die sich die Angabe bezieht. Mit Funktionalität der PolyolKomponente A1) ist somit beispielsweise die zahlenmittlere Funktionalität der Mischung aus den in der Komponente A1 enthaltenden Polyolen in Bezug auf alle enthaltenen gegenüber Isocyanaten reaktiven Wasserstoffatomen gemeint.

Mit "Molgewicht" oder "Molmasse" bzw. "Mn" ist im Sinne dieser Anmeldung jeweils die zahlengewichtete mittlere Molmasse gemeint.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2, Stand November 2007.

Die Erfindung soll anhand der nachfolgenden Beispiele und Vergleichsbeispiele näher erläutert werden, ohne dass sie in ihrem Umfang durch die Beispiele eingeschränkt wird.

**Beispiele:**

Verwendete Normen bzw. Messgeräte:

Bestimmung der Rohdichte: Schaumstoffe aus Kautschuk und Kunststoffen - Bestimmung der Rohdichte (ISO 845:2006); Deutsche Fassung EN ISO 845:2009

Bestimmung der Offenzelligkeit: - Bestimmung des Volumenanteils offener und geschlossener Zellen (ISO 4590:2002); Deutsche Fassung EN ISO 4590:2003

Bestimmung der Druckfestigkeit: Harte Schaumstoffe -Bestimmung der Druckeigenschaften (ISO 844:2014); Deutsche Fassung EN ISO 844:2014

Bestimmung der OH-Zahl: Die Bestimmung der Hydroxylzahl - Teil 2: Verfahren mit Katalysator gemäß DIN 53240-2, Stand November 2007

Bestimmung der Zellgröße: Lichtmikroskopische Auswertung via Lichtmikroskop VHX 5000; Der zu vermessende Probekörper wird an 3 unterschiedlichen Stellen jeweils über einen kreisförmigen Bereich mit einem Durchmesser von 5 mm untersucht. Dabei wird quer zur Schäumrichtung beobachtet. Hierbei wird die Auflösung so gewählt, dass der ausgewählte Bereich mehr als 100 Zellen erfasst. Danach werden alle Zellen mit der frei erhältlichen Software ImageJ ausgewertet und aus den erhaltenen ECD Werten (Equivalent Circle Diameter) der arithmetisch gemittelte Zelldurchmesser berechnet.

Die Angabe des Anteils an primären OH-Funktionen in [%] in Tabelle 1 bezieht sich auf den Anteil an primären OH-Funktionen an der Gesamtzahl der OH-Funktionen in der Mischung aus den in der Formulierung enthaltenden Polyolen.

Beispiele 1 - 3 sowie Vergl.-Bsp. 1 - 2:

Gemäß den in der nachfolgenden Tabelle 1 aufgeführten Rezepturen wurden mit überkritischem $CO_2$ getriebene Polyurethanschaumstoffe hergestellt. Wenn nicht anders vermerkt, sind Mengenangaben als Gewichtsteile zu verstehen. Es kamen folgende Stoffe zum Einsatz:

| | |
|---|---|
| Polyol 1: | Trimethylol-initiiertes Polyetherpolyol mit Propylenoxid als Alkylenoxid mit einer Hydroxylzahl von 880 mg KOH/g, einer Funktionalität von 3 und einer Viskosität bei 25 °C von 6100 mPa·s |
| Polyol 2: | Trimethylol-initiiertes Polyetherpolyol mit Ethylenoxid als Alkylenoxid mit einer Hydroxylzahl von 550 mg KOH/g, einer Funktionalität von 3 und einer Viskosität bei 25 °C von 505 mPa·s |
| Polyol 3: | 1,2-Propandiol-initiiertes Polyetherpolyol mit Propylenoxid als Alkylenoxid mit einer Hydroxylzahl von 56 mg KOH/g, einer Funktionalität von 2 und einer Viskosität bei 25 °C von 310 mPa·s |
| Polyol 4: | 1,2-Propandiol-initiiertes Polyetherpolyol mit Propylenoxid als Alkylenoxid mit einer Hydroxylzahl von 112 mg KOH/g, einer Funktionalität von 2 und einer Viskosität bei 25 °C von 140 mPa·s |
| Polyol 5: | Trimethylolpropan-initiiertes Polyetherpolyol mit Propylenoxid als Alkylenoxid mit einer Hydroxylzahl von 235 mg KOH/g, einer Funktionalität von 3 und einer Viskosität bei 25 °C von 350 mPa·s |
| Polyol 6: | Hydroxy-funktioneller Fettsäureester mit einer Hydroxylzahl von 160 mg KOH/g und einer Funktionalität von 3. |
| Tegostab B 8443: | Polyetherpolydimethylsiloxan-Copolymer-Schaumstabilisator (Evonik). |
| Desmorapid PU 1792: | Katalysator, Kaliumacetat in Diethylenglykol (Covestro) |
| Amin ZZ: | Katalysator, N'-(3-(Dimethylamino)propyl)-N,N-dimethylpropan-1,3-diamin, AirProducts |
| Isocyanat: | Gemisch aus MDI und PMDI mit einer Funktionalität von ca. 2,8, einem NCO-Gehalt von ca. 31,5 Gew.-% und einer Viskosität bei 25 °C von ca. 200 mPa·s (Desmodur 44V20L, Covestro) |

Herstellung von Polyurethanformschäumen auf einer Hochdruckanlage:

Zur Herstellung von Polyurethanformschäumen auf einer Hochdruckanlage wurde eine Polyolformulierung aus den in der nachfolgenden Tabelle 1 aufgeführten gegenüber Isocyanaten reaktiven Verbindungen, Stabilisatoren, Katalysatoren hergestellt. Diese wurde in einer Standard-Hochdruckmischanlage als Polyolkomponente eingesetzt und bei einem Druck von 160 bar und einer Temperatur von 50 °C mit $CO_2$ vermischt. Hierbei herrschten für das Treibmittel überkritische Bedingungen (überkritisches $CO_2$, auch "scCO$_2$"). In einem Hochdruckmischkopf wurde diese Mischung mit einem Polyisocyanat, das mit einem Druck von 160 bar und einer Temperatur von 35 °C gefördert wurde, vermischt. Die Schussmenge betrug 180 g/s, entsprechend einem Volumenstrom von 95 ml/s (Dichte der Mischung 1,2 g/ml). Das so erhaltene Reaktionsgemisch wurde in eine mit 11 bar Gegendruck vorgespannte geschlossene Form mit einer Formtemperatur von 55 °C dosiert. Nach Ende der Injektion wurde der vorgespannte Gegendruck noch für weitere 8 s gehalten und erst dann schlagartig innerhalb von < 2 Sekunden auf Umgebungsdruck entspannt.

Im erfindungsgemäßen Verfahren wurde die Form nach einer vorgegebenen Zeit geöffnet (s. Tabelle 1), und es wurde zur Komprimierung eine Platte einer gewünschten Dicke (Bsp. 1, Bsp. 2: 38% der Schaumstoffdicke in das Werkzeug eingelegt und dieses wieder geschlossen. Anschließend wurde der Schaumstoff für eine vorgegebene Zeit (Bsp. 1 - 2: 5 min, Bsp. 3: 10 min) in der volumenreduzierten Form komprimiert und dann entformt. Im nicht erfindungsgemäßen Verfahren (Vergl.-Bsp. 1) wurde das Werkzeug lediglich nach einer vorgegebenen Zeit geöffnet und der erhaltene Schaumstoff entformt. Hierbei entsprach der Schaumstoff der Bsp. 1 - 3 vor der Komprimierung dem Schaumstoff des Vergl.-Bsp. 1. Im Vergl.-Bsp. 2 wurde eine geringere Menge an scCO$_2$ verwendet, so dass der dort erhaltene Schaumstoff ohne Komprimierung eine höhere Rohdichte als im Bsp. 1 bzw. eine vergleichbare Rohdichte wie im Bsp. 2 aufwies.

Beispiel 3 belegt, dass auch vollständig ausgehärtete Schaumstoffe durch Komprimierung in ihrer Wärmeleitfähigkeit verbessert werden können, das heißt, dass die Wärmeleitfähigkeit durch die Komprimierung abnimmt.

Die Beispiele 1 - 3 zeigen, dass die Komprimierung eine höhere Rohdichte erzeugt, gleichzeitig die arithmetisch gemittelten Zellgrößen sinken. Dadurch entstehen sehr feinzellige Schaumstoffe mit einer ovalen Zellform, welche überraschenderweise im Vakuum eine niedrige Wärmeleitfähigkeiten besitzen. Die komprimierten Schaumstoffe zeichnen sich dadurch aus, dass die mechanischen Eigenschaften im Vergleich zu nicht komprimierten Schaumstoffen (Vergl.-Bsp. 1) nicht schlechter werden.

Nicht komprimierte Schäume, wie zB ein Ausgangsschaumstoff in Vergleichsbeispiel 1, weisen trotz niedrigerer Rohdichte eine höhere Wärmeleitfähigkeit auf. Der Vergleich von Schaumstoffen mit Rohdichten analog der komprimierten Schaumstoffe (Vergl.-Bsp. 2 vs. Bsp. 1 - 3) zeigt deutlich, dass ohne Komprimierung keine sehr feinzelligen Schäume herstellbar sind und die Wärmeleitfähigkeit deutlich erhöht ist.

**Tabelle 1**

| | Vergl.-Beispiel 1 | Beispiel 1 | Beispiel 2 | Vergl.-Beispiel 2 | Beispiel 3 |
|---|---|---|---|---|---|
| Polyol 1 | 13,0 | 13,0 | 13,0 | 13,0 | 13,0 |
| Polyol 2 | 32,50 | 32,50 | 32,50 | 32,50 | 32,50 |
| Polyol 3 | 10,80 | 10,80 | 10,80 | 10,80 | 10,80 |
| Polyol 4 | 7,60 | 7,60 | 7,60 | 7,60 | 7,60 |
| Polyol 5 | 21,60 | 21,60 | 21,60 | 21,60 | 21,60 |
| Rizinusöl | 10 | 10 | 10 | 10 | 10 |
| Tegostab B 8443 | 2 | 2 | 2 | 2 | 2 |
| Desmorapid PU 1792 | 2,25 | 2,25 | 2,25 | 2,25 | 2,25 |
| Amin ZZ | 0,9 | 0,9 | 0,9 | 0,9 | 0,9 |
| Isocyanat 1 | 94 | 94 | 94 | 94 | 94 |
| scCO$_2$ | 6,0 | 6,0 | 6,0 | 3,1 | 6,0 |
| | | | | | |
| durchschnittliche Funktionalität f | 2,9 | 2,9 | 2,9 | 2,9 | 2,9 |
| primäre OH-Funktionen [%] | 44 | 44 | 44 | 44 | 44 |
| | | | | | |
| Zeit zwischen Druckentspannung und Beginn des Komprimierens [min] | 5 | 5 | 1 | 5 | > 2800 |

(fortgesetzt)

| | Vergl.-Beispiel 1 | Beispiel 1 | Beispiel 2 | Vergl.-Beispiel 2 | Beispiel 3 |
|---|---|---|---|---|---|
| Komprimierungsgrad des Schaumes (1-Dk/De) [%] | 0 | 25 | 37 | 0 | 20 |
| | | | | | |
| Mechanik | | | | | |
| Rohdichte [kg/m$^3$] | 36 | 50 | 78 | 73 | 41 |
| Druckfestigkeit (parallel) (MPa) | 0,18 | 0,21 | 0,35 | 0,41 | 0,18 |
| Druckfestigkeit (quer) (MPa) | 0,15 | 0,18 | 0,27 | 0,37 | 0,16 |
| | | | | | |
| Offenzelligkeit [%] | 96 | 96 | 95 | 95 | 96 |
| Zellgröße quer (arithmetisches Mittel) [$\mu$m] | 86 | 65 | 60 | 90 | 71 |
| Erscheinungsform der Zellen | rund | oval | oval | rund | oval |
| | | | | | |
| Wärmeleitfähigkeit im Vakuum, (mW·m$^{-1}$·K$^{-1}$) | 10,0 | 8,7 | 6,9 | 13,2 | 9,4 |

## Patentansprüche

1. Verfahren zur Herstellung eines komprimierten offenzelligen PUR/PIR-Hartschaumstoffs umfassend die Schritte

    i. Herstellen eines Reaktionsgemischs R) umfassend

      - eine gegenüber Isocyanaten reaktive Zusammensetzung A) umfassend

        eine Polyolkomponente A1) mit einer Funktionalität f von > 2,5 umfassend wenigstens ein Polyetherpolyol, Polyesterpolyol, Polycarbonatpolyol, Polyether-Polycarbonatpolyol, Polyetheresterpolyol, oder Mischungen daraus,
gegebenenfalls eine Katalysatorkomponente A2),
gegebenenfalls eine Hilfs- und Zusatzkomponente A3);

      - eine Polyisocyanatkomponente B); und
      - eine Treibmittelkomponente C) umfassend $CO_2$ im überkritischen Zustand,

    ii. Einbringen des Reaktionsgemischs R) aus Schritt i. in eine geschlossene Form, wobei ein Gegendruck in der geschlossenen Form während des Einbringens 2,0 - 90 bar beträgt,
    iii. Aufschäumenlassen des Reaktionsgemischs R) in der geschlossenen Form in einer Schäumrichtung, um einen PUR/PIR-Hartschaumstoff aufweisend eine Dicke $D_e$ in einer Dimension, die im Wesentlichen senkrecht zur Schäumrichtung verläuft, zu erhalten,
    iv. Entformen des PUR/PIR-Hartschaumstoffs,
    v. Komprimieren der Dicke $D_e$ des PUR/PIR-Hartschaumstoffs auf eine Dicke $D_k$, um den komprimierten PUR/PIR-Hartschaumstoff zu erhalten, wobei $D_k$ 0,05·$D_e$ bis 0,95·$D_e$ beträgt und wobei der Schritt v. vor oder nach dem Schritt iv. durchgeführt werden kann.

2. Verfahren gemäß Anspruch 1, wobei der Anteil aller in der Polyolkomponente A1) vorhandenen primären OH-Funktionen an der Gesamtzahl der endständigen OH-Funktionen in der Polyolkomponente A1) mindestens 30% beträgt.

3. Verfahren gemäß einem der Ansprüche 1 bis 3, wobei das Reaktionsgemisch R) im Wesentlichen frei ist von zellöffnenden Verbindungen oder keine zellöffnenden Verbindungen enthält.

4.  Verfahren gemäß einem der Ansprüche 1 bis 4, wobei Schritt i. sowie gegebenenfalls ii. unter für das $CO_2$ überkritischen Bedingungen stattfindet.

5.  Verfahren gemäß einem der Ansprüche 1 bis 5, wobei in Schritt iii. der Gegendruck für einen Zeitraum 1 von 1 - 40 s nach Ende des Schritts ii. gehalten wird und anschließend der Gegendruck während eines Zeitraums 2 mit einer Druckentlastungsrate von 1 - 90 bar/s entlastet wird.

6.  Verfahren gemäß einem der Ansprüche 1 bis 6, wobei die Polyolkomponente A1) eine Hydroxylzahl von 280 - 600 mg KOH/g, gemessen nach DIN 53240-2:2007, aufweist.

7.  Verfahren gemäß einem der Ansprüche 1 bis 7, wobei die gegenüber Isocyanaten reaktive Zusammensetzung A) zu mindestens 65 Gew.-% aus der Polyolkomponente A1) besteht, die eine Hydroxylzahl zwischen 280 bis 600 mg KOH/g, gemessen nach DIN 53240-2:2007, und eine Funktionalität von $\geq$ 2,8 bis $\leq$ 6,0 aufweist, und der Anteil der in der gegenüber Isocyanaten reaktiven Zusammensetzung A) vorhandenen primären OH-Funktionen an der Gesamtzahl aller endständigen OH-Funktionen in der gegenüber Isocyanaten reaktiven Zusammensetzung A mindestens 35% beträgt.

8.  Verfahren gemäß einem der Ansprüche 1 bis 8, wobei die gegenüber Isocyanaten reaktive Zusammensetzung A) zu mindestens 60 Gew.-% aus Polyetherpolyol besteht.

9.  Verfahren gemäß einem der Ansprüche 1 bis 9, wobei der Gehalt an Treibmittelkomponente C) 0,5 Gew.-% bis 15 Gew.-%, bezogen auf das Gesamtgewicht von R), beträgt.

10. Verfahren gemäß einem der Ansprüche 1 bis 10, wobei die gegenüber Isocyanaten reaktive Zusammensetzung A) eine Katalysatorkomponente A2) umfasst, bevorzugt eine Katalysatorkomponente A2) in einer Menge von $\geq$ 0,01 bis < 2,0 Gew.-%, bezogen auf das Gesamtgewicht der gegenüber Isocyanaten reaktiven Zusammensetzung A), umfasst.

11. Verfahren gemäß einem der Ansprüche 1 bis 11, wobei die gegenüber Isocyanaten reaktive Zusammensetzung A) eine Hilfs- und Zusatzkomponente A3 aufweist, die einen Stabilisator umfasst, bevorzugt einen Stabilisator in einer Menge von $\geq$ 0,05 bis < 5 Gew.-%, bezogen auf das Gesamtgewicht der gegenüber Isocyanaten reaktiven Zusammensetzung A), umfasst.

12. Komprimierter offenzelliger PUR/PIR-Hartschaumstoff, der durch das Verfahren gemäß einem der Ansprüche 1 bis 12 erhältlich ist.

13. Komprimierter offenzelliger PUR/PIR-Hartschaumstoff gemäß Anspruch 12 mit einer Rohdichte von 30 - 120 kg/m$^3$ gemäß ISO 845:2006, bevorzugt 30 - 70 kg/m$^3$, einer Offenzelligkeit von > 90% gemäß ISO 4590:2002, bevorzugt $\geq$ 94% und mit einem durchschnittlichen Zelldurchmesser von 40-130 $\mu$m gemäß lichtmikroskopischer Auswertung.

14. Vakuumisolationspaneel enthaltend einen PUR/PIR-Hartschaumstoff gemäß Anspruch 13.

15. Kühlschrank, Gefrierschrank oder Kühl-Gefrierkombination, enthaltend einen komprimierten offenzelligen PUR/PIR-Hartschaumstoff gemäß Anspruch 12 oder 13 oder ein Vakuumisolationspaneel gemäß Anspruch 14.

**Europäisches Patentamt**
**European Patent Office**
**Office européen des brevets**

# EUROPÄISCHER RECHERCHENBERICHT

**Nummer der Anmeldung**

**EP 22 17 6274**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | WO 2018/162372 A1 (COVESTRO DEUTSCHLAND AG [DE]) 13. September 2018 (2018-09-13) * Beispiel 1; Tabellen 1,2 * ----- | 1-15 | INV. C08G18/22 C08G18/36 C08G18/48 |
| Y,D | DE 10 2005 021994 A1 (BASF AG [DE]) 23. November 2006 (2006-11-23) * Absatz [0021] * ----- | 1-15 | C08G18/66 C08G18/76 C08J9/36 |

**RECHERCHIERTE SACHGEBIETE (IPC)**

C08G
C08J

Der vorliegende Recherchenbericht wurde für alle Patentansprüche erstellt

| Recherchenort | Abschlußdatum der Recherche | Prüfer |
|---|---|---|
| München | 17. Oktober 2022 | Bergmeier, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                    

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 17 6274

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-10-2022

| Im Recherchenbericht angeführtes Patentdokument | Datum der Veröffentlichung | Mitglied(er) der Patentfamilie | Datum der Veröffentlichung |
|---|---|---|---|
| WO 2018162372 A1 | 13-09-2018 | CN 110382581 A | 25-10-2019 |
| | | CN 110382582 A | 25-10-2019 |
| | | EP 3372625 A1 | 12-09-2018 |
| | | EP 3592790 A1 | 15-01-2020 |
| | | EP 3592791 A1 | 15-01-2020 |
| | | JP 7110221 B2 | 01-08-2022 |
| | | JP 2020509145 A | 26-03-2020 |
| | | US 2020017624 A1 | 16-01-2020 |
| | | US 2020080767 A1 | 12-03-2020 |
| | | WO 2018162372 A1 | 13-09-2018 |
| | | WO 2018162387 A1 | 13-09-2018 |
| DE 102005021994 A1 | 23-11-2006 | AT 445802 T | 15-10-2009 |
| | | AU 2006245777 A1 | 16-11-2006 |
| | | CN 101171451 A | 30-04-2008 |
| | | DE 102005021994 A1 | 23-11-2006 |
| | | EP 1893905 A1 | 05-03-2008 |
| | | ES 2331536 T3 | 07-01-2010 |
| | | JP 2008540955 A | 20-11-2008 |
| | | KR 20080008382 A | 23-01-2008 |
| | | NZ 563010 A | 30-10-2009 |
| | | PL 1893905 T3 | 31-03-2010 |
| | | SI 1893905 T1 | 29-01-2010 |
| | | US 2008199678 A1 | 21-08-2008 |
| | | WO 2006120183 A1 | 16-11-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018162372 A1
- DE 102005021994 A1
- EP 2910585 A
- EP 1359177 A
- WO 2010043624 A
- EP 1923417 A

**In der Beschreibung aufgeführte Nicht-Patentliteratur**

- **IONESCU.** Chemistry and Technology of Polyols for Polyurethanes. Rapra Technology Limited, 2005, 55
- Oligo-Polyols for Elastic Polyurethanes. 263
- Polyester Polyols for Elastic Polyurethanes. 321
- Polyether Polyols for Rigid Polyurethane Foams. 419
- Polyester Polyols for Rigid Polyurethane Foams
- Polyurethane. Kunststoff-Handbuch. Carl Hanser Verlag, 1993, vol. 7, 104-127